# EUROPÄISCHE PATENTSCHRIFT

(11) **EP 0 461 346 B1**
(45) Veröffentlichungstag und Bekanntmachung des Hinweises auf die Patenterteilung: **22.09.1993**
(21) Anmeldenummer: 91103242.3
(22) Anmeldetag: 04.03.1991
(51) Int. Cl.: B62D 25/04

(54) **Aufrechte Säule für eine Fahrzeug-Aufbaustruktur**
Upright pillar for a vehicle body structure
Montant pour une structure de carrosserie de véhicule

(30) Priorität: 09.06.1990 DE 4018593
(43) Veröffentlichungstag der Anmeldung: 18.12.1991
(73) Patentinhaber: Dr.Ing.h.c. F. Porsche Aktiengesellschaft, 70435 Stuttgart (DE)
(72) Erfinder: Wurl, Willi, Dipl.-Ing., W-7532 Niefern-Oeschelbronn 1 (DE)

(56) Entgegenhaltungen:
- EP-A- 0 146 716
- WO-A-90/02680
- DE-A- 3 429 447
- US-A- 2 380 523
- US-A- 4 552 400
- Der Fahrzeugaufbau aus Leichtmetall, Heinz Suppus, 1. u. 2. Teil, Verlag der Aluminiumzentrale e. V., Düsseldorf 1953 und 1954, Teil 2, S. 44-54, Tafel 24-36

## Beschreibung

Die Erfindung bezieht sich auf eine aufrechte Säule für eine Fahrzeug-Aufbaustruktur gemäß dem Oberbegriff des Patentanspruchs 1.

Der EP-PS 0 146 716 ist eine aus Leichtmetall gefertigte Aufbaustruktur mit einer zwischen einem Schweller und einem Dachrahmenseitenteil angeordneten aufrechten Säule zu entnehmen, wobei die Säule aus Blech hergestellt ist.

Die Veröffentlichung "*Der Fahrzeugaufbau aus Leichtmetall", Heinz Suppus, 2. Teil, Verlag der Aluminium-Zentrale e.V., Düsseldorf 1954, Seiten 44-54, Tafel 24-36* zeigt in Bild 9 der Tafel 33 eine aus drei Strangpreßprofilen zusammengesetzte aufrechte Säule für eine aus Leichtmetall gefertigte Fahrzeug-Aufbaustruktur, wobei die einzelnen Teile der Säule aneinandergebracht und durch Schweißen miteinander verbunden sind.

Im Anschlußbereich an den untenliegenden Längsträger sind zwei Strangpreßprofile - in der Seitenansicht gesehen - endseitig gebogen, wodurch eine breitere Abstützbasis für die Säule am Längsträger erzielt wird. Im Bereich, in dem die beiden Strangpreßprofile gebogen sind, weist die Säule nicht mehr die Form eines kastenförmigen Hohlprofiles auf.
Oberhalb des gebogenen Abschnittes der beiden Strangpreßprofile ist bei dieser Konstruktion nur ein gleichbleibender Querschnitt der Säule realisierbar. Damit die drei Strangpreßprofile miteinander verschweißt werden können, ist eine Halte- oder Spannvorrichtung zur Lagefixierung der Strangpreßprofile erforderlich.

Aufgabe der Erfindung ist es, eine aufrechte Säule für eine Aufbaustruktur so zu gestalten, daß sie bei kostengünstiger Herstellung einfach an den stylistisch vorgegebenen Formverlauf der Türfuge anpassbar ist und daß darüber hinaus angrenzende Aufbauteile in einfacher Weise an die Säule anschließbar sind.

Erfindungsgemäß wird diese Aufgabe durch die kennzeichnenden Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch die Ausbildung der Säule aus einem Strangpreßprofil und einem mit diesem verbundenen Schließteil eine kostengünstige Herstellung der Säule erzielt wird. In das Strangpreßprofil lassen sich in einfacher Form eine Aufnahme für eine innere Türdichtung und eine Befestigung für ein benachbartes Aufbauteil (Kotflügel oder Seitenteil) integrieren.

Durch die offene Profilform läßt sich das Strangpreßprofil leicht an den gebogenen Formverlauf der Türfuge anpassen. Strangpreßprofil und Schließteil lassen sich durch die Klemmverbindung in einfacher Weise durch Laserstrahlschweißen miteinander verbinden, ohne daß eine zusätzliche Spannvorrichtung beim Schweißen erforderlich ist.

Ein Ausführungsbeispiel der Erfindung ist in der Zeichnung darglegt und wird im folgenden näher beschrieben.

Es zeigt:
- Fig. 1: eine perspektivische Ansicht von schräg vorne auf eine Aufbaustruktur eines Personenwagens,
- Fig. 2: eine Seitenansicht auf eine auf einen Schweller aufgesetzte Säule des Personenwagens in größerem Maßstab,
- Fig. 3: eine Ansicht in Pfeilrichtung R der Fig. 2,
- Fig. 4: einen Schnitt nach der Linie IV-IV der Fig. 2 in größerem Maßstab,
- Fig. 5: eine perspektivische Ansicht einer weiteren Ausführungsform einer Säule,
- Fig. 6: eine perspektivische Ansicht einer weiteren Ausführungsform einer Säule.

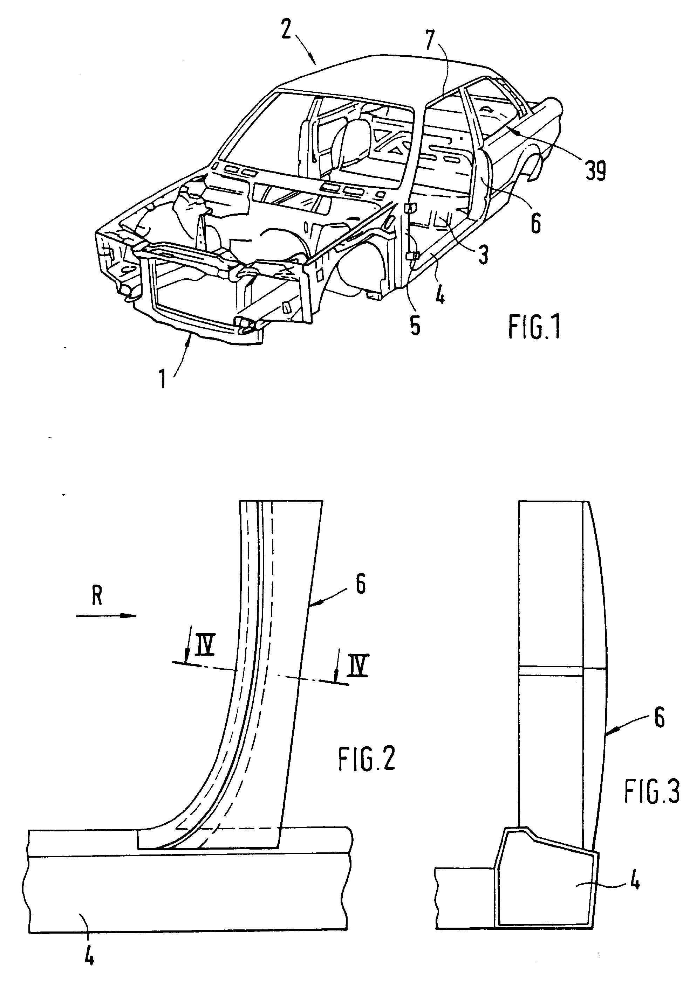

In Fig. 1 ist eine Aufbaustruktur 1 eines Personenwagens 2 dargestellt, die im seitlichen Bereich eine Türöffnung 3 aufweist, die von einem untenliegenden Längsträger 4 (Schweller), einer vorderen Säule 5 (A-Säule), einer hinteren aufrechten Säule 6 und einem seitlichen Dachrahmen 7 begrenzt ist. Die hintere Säule 6, die auch als B-Säule, Schloßsäule oder bei 4-türigen Fahrzeugen als Mittelsäule bezeichnet wird, ist stumpf auf den untenliegenden Längsträger 4 aufgesetzt und mit diesem fest verbunden. Dies kann durch thermische Verbindung (Schweißen), durch Kleben oder durch mechanische Verbindung (Mieten, Schrauben oder dgl.) erfolgen.

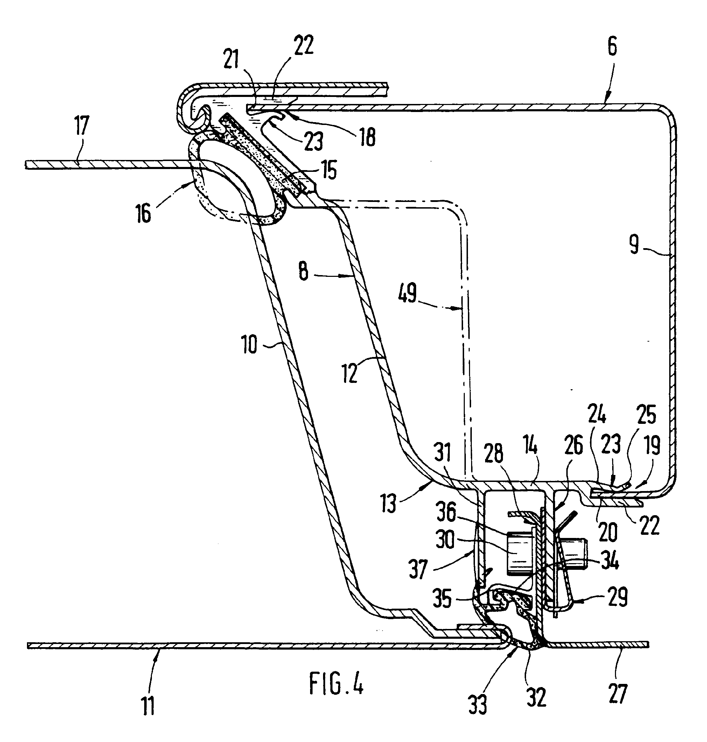

Oben ist die Säule 6 entweder direkt oder unter Zwischenschaltung eines nicht näher dargestellten Knotenelementes an den seitlichen Dachrahmen 7 angeschlossen. Die Säule 6 weist im Querschnitt gesehen die Form eines kastenförmigen Hohlprofils auf und ist aus einem profilierten Strangpreßprofil 8 und einem mit diesem verbundenen Schließteil 9 zusammengesetzt (Fig. 4). Das Strangpreßprofil 8 weist - in der Seitenansicht gesehen - entlang seiner Höhenerstreckung einen gebogenen Formverlauf auf, der dem Verlauf der Türfuge angepaßt ist.

Benachbart einer Stirnseite 10 eines Türkörpers 11 ist am Strangpreßprofil 8 ein schräggerichteter Abschnitt 12 vorgesehen, der an seinem äußeren Ende über einen radienförmigen Übergangsbereich 13 mit einem in Fahrzeuglängsrichtung verlaufenden Abschnitt 14 verbunden ist (Fig. 4).

Am schräggerichteten Abschnitt 12 ist örtlich eine hinterschnittene Nut 15 vorgesehen, in die ein innerer schlauchförmiger Dichtkörper 16 eingesetzt ist. Der Dichtkörper 16 wirkt mit einem Türinnenblech 17 abdichtend zusammen. Das Strangpreßprofil 8 weist zwei mit Abstand zueinander angeordnete, etwa U-förmig profilierte Aufnahmeabschnitte 18, 19 auf, in die Randabschnitte 20, 21 des Schließteils 9 eingreifen.

Die beiden Aufnahmeabschnitte 18, 19 sind in Fahrzeuglängsrichtung ausgerichtet, wobei der eine Aufnahmeabschnitt 19 am freien Ende des Abschnittes 14 und der andere Abschnitt 18 benachbart der hinterschnittenen Nut 15 angeordnet ist. Jeder Aufnahmeabschnitt 18, 19 besteht aus einem geraden äußeren Schenkel 22 und einem abgewinkelten inneren Schenkel 23. Der innere Schenkel 23 setzt sich aus zwei schrägverlaufenden Bereichen 24, 25 zusammen, wobei das freie Ende des Schenkels 23 sich vom eingesetzten Randabschnitt 20, 21 des Schließteils 9 weg erstreckt.

Jeder Aufnahmeabschnitt 18, 19 ist so ausgebildet, daß beim Einschieben des Schließteils 9 eine Klemmverbindung 38 zwischen den Schließteil 9 und dem Aufnahmeabschnitt 18, 19 gebildet wird, d.h., die beiden Schenkel 22, 23 liegen unter seitlicher Vorspannung am Schließteil 9 an.

Im Bereich des in Längsrichtung verlaufenden Abschnitts 14 des Strangpreßprofils 8 ist zumindest ein in Fahrzeugquerrichtung verlaufender, nach außen hin gerichteter Steg 26 angeformt, der bei einem zweitürigen Fahrzeug zur Befestigung eines hinteren Seitenteils bzw. eines Kotflügels 27 der Aufbaustruktur 1 dient. Der Steg 26 verläuft mit geringem Abstand zum endseitigen Aufnahmeabschnitt 19.

Ein etwa L-förmig ausgebildeter endseitiger Flansch 28 des Kotflügels 27 liegt an einer Seite des Stegs 26 bzw. an einer auf den Steg 26 aufgeklipsten Blechmutter 29 an und ist mittels einer in die Blechmutter eingedrehten Befestigungsschraube 30 einstellbar in Lage gehalten. Der Steg 26 weist eine Öffnung zum Hindurchführen der Befestigungsschraube 30 auf. Gemäß Fig. 4 ist am Strangpreßprofil 8 ein weiterer Steg 31 angeformt, der parallel und mit Abstand zum Steg 26 verläuft. Die Befestigung des Kotflügels 27 wird durch einen außenliegenden, schlauchförmigen Dichtkörper 32 verdeckt, der im Bereich der Türfuge 33 verläuft und auf einer Halteleiste 34 sitzt, die ebenfalls durch die Befestigungsschraube 30 in Lage gehalten ist.

Die Halteleiste 34 weist eine hinterschnittene Nut 35 für den Dichtkörper 32 und einen länglichen Arm 36 auf, wobei der Arm 36 am abgestellten Flansch 28 des Kotflügels 27 anliegt. Am Steg 31 ist eine nicht näher dargestellte Öffnung angeordnet, durch die ein Werkzeug zum Eindrehen der Befestigungsschraube 30 hindurchführbar ist. Mach erfolgter Montage wird die Öffnung durch einen abnehmbaren Stopfen 37 verschlossen.

Das Schließteil 9 wird durch ein Blech- Abkantteil oder ein Strangpreß-Profilteil gebildet. Das eine offene Form aufweisende Strangpreßprofil 8 und das Schließteil 9 werden zusätzlich zur Klemmverbindung 38 durch Kleben, Schweißen, Nieten oder dgl. miteinander verbunden. Durch die Klemmverbindung 38 werden das Strangpreßprofil 8 und Schließteil 9 derart in Lage gehalten, daß beispielsweise eine Verbindung durch Laserstrahlschweißen ohne zusätzliche Spannvorrichtung beim Schweißen möglich ist.

Das Schließteil 9 weist einen etwa U-förmigen Querschnitt auf, wobei sich die beiden parallel zueinander verlaufenden Wandabschnitte in Fahrzeuglängsrichtung erstrecken. Das Strangpreßprofil 8, das Schließteil 9 sowie die verbleibende Aufbaustruktur 1 sind vorzugsweise aus Leichtmetall (Aluminium, Aluminiumlegierung, Magnesium oder dgl.) gefertigt.

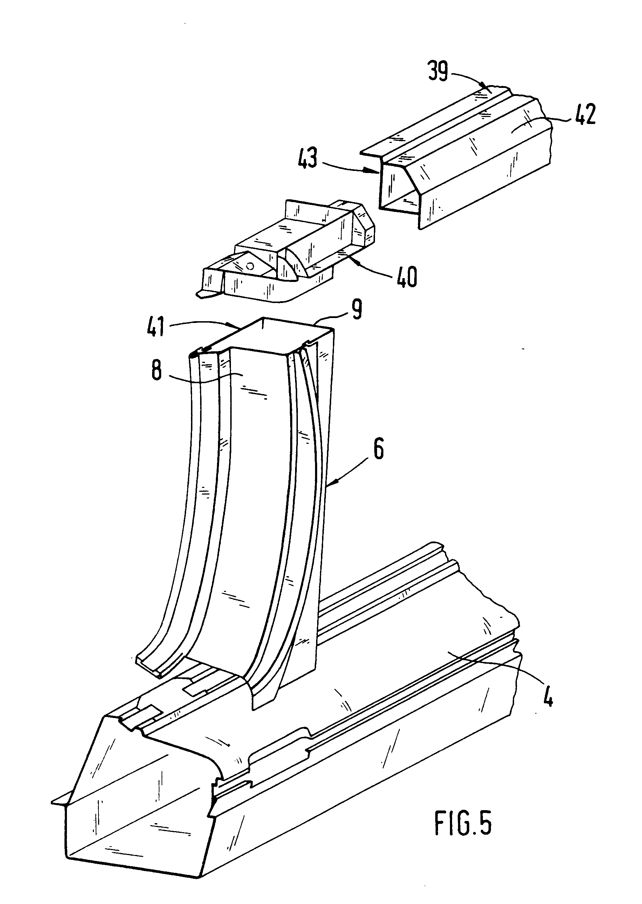

Fig. 5 zeigt eine weitere Ausführungsform einer aufrechten Säule 6. Bei dieser Anordnung erstreckt sich die durch ein Strangpreßprofil 8 und ein Schließteil 9 gebildete Säule 6 lediglich von dem untenliegenden Längsträger 4 (Schweller) bis etwa in Höhe einer Gürtellinie 39 des Personenwagens 2. Ein oberes Ende 41 der Säule 6 ist über ein Knotenelement 40 mit einem im Bereich der Gürtellinie 39 verlaufenden oberen Längsträger 42 der Aufbaustruktur 1 verbunden. Das Knotenelement 40 wirkt über eine Steckverbindung mit dem Ende 41 der Säule 6 und einen Endbereich 43 des oberen Längsträgers 42 zusammen und kann zusätzlich mit beiden Aufbauteilen 6, 42 verschweißt werden. Darüber hinaus kann das Knotenelement 40 so ausgebildet sein, daß es als Lagerplatte für ein nicht näher dargestelltes Verdeckgestänge eines Klappverdecks dient.

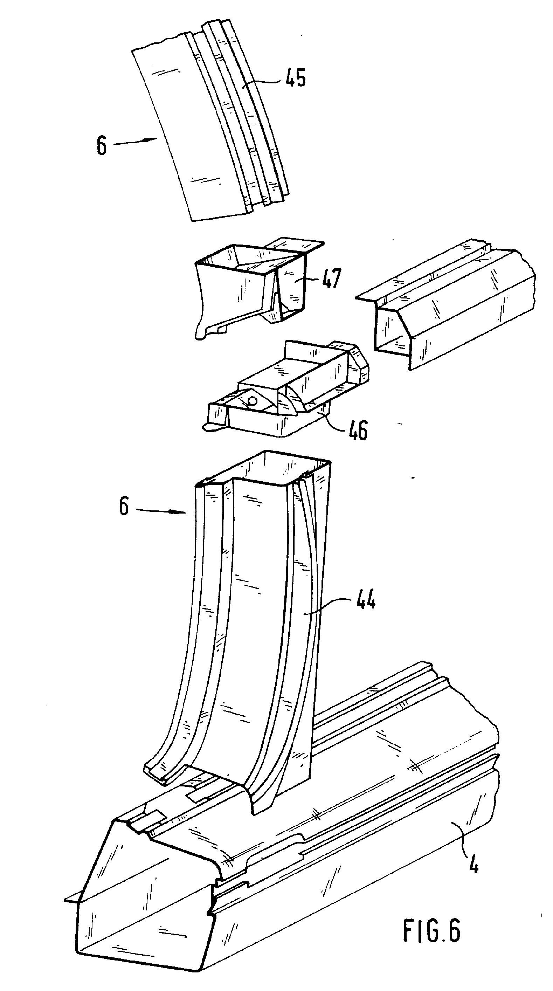

Entsprechend Fig. 6 setzt sich die Säule 6 aus einem vom Längsträger 4 (Schweller) bis etwa in Höhe der Gürtellinie 39 verlaufenden unteren Abschnitt 44 und einem oberhalb der Gürtellinie 39 verlaufenden Abschnitt 45 zusammen, wobei die beiden Abschnitte 44, 45 unter Vermittlung eines oder mehrerer Knotenelemente 46, 47 miteinander verbunden sind.

Bei dieser Anordnung kann der obere Abschnitt 45 einen kleineren Querschnitt aufweisen als der untere Abschnitt 44 der Säule 6. Ferner kann der obere Abschnitt 45 durch ein geschlossenes Hohlprofil gebildet werden, das im Strangpreßverfahren hergestellt ist.

Durch einen Prägevorgang kann die Fläche 12 zur Aufnahme eines Schließkeils örtlich auf der Kontur 49 verformt werden. Dadurch wird verhindert, daß der Schließkeil zu weit in den Öffnungsbereich der Tür hineinragt.

Die Stege 26 und 31 können oberhalb und unterhalb der Kotflügelbefestigung durch Beschnitt der Außenkontur des Fahrzeugs angepaßt werden. Damit wird erreicht, daß der Hohlquerschnitt der Säule einen maximalen Querschnitt erhalten kann.

## Patentansprüche

1. Aufrechte Säule für eine vorzugsweise aus Leichtmetall gefertigt Fahrzeug-Aufbaustruktur, wobei die mehrteilig ausgebildete, zumindest ein Strangpreßprofil mit offener Querschnittsform enthaltende Säule im Querschnitt gesehen zumindest abschnittsweise die Form eines kastenförmigen Hohlprofils aufweist und auf einen untenliegenden Schweller aufgesetzt ist, **dadurch gekennzeichnet**, daß die Säule (6) aus einem Strangpreßprofil (8) und einem durch ein Blechteil gebildet Schließteil (9) besteht, wobei am Strangpreßprofil (8) zwei mit Abstand zueinander angeordnete, etwa U-förmige Aufnahmeabschnitte (18, 19) vorgesehen sind, in die Randabschnitte (20, 21) des Schließteils (9) eingreifen und daß jeder Randabschnitt (20, 21) des Schließteils (9) über eine Klemmverbindung (38) mit dem zugehörigen Aufnahmeabschnitt (18, 19) des Strangpreßprofiles (8) zusammenwirkt.

2. Säule nach Anspruch 1, **dadurch gekennzeichnet**, daß jeder Aufnahmeabschnitt (18, 19) durch einen äußeren geraden Schenkel (22) und einen inneren abgewinkelten Schenkel (23) gebildet wird.

3. Säule nach den Ansprüchen 1 und 2, **dadurch gekennzeichnet**, daß das Strangpreßprofil (8) benachbart dem innenliegenden Aufnahmeabschnitt (18) eine hinterschnittene Nut (15) zur Aufnahme eines Dichtkörpers (16) aufweist.

4. Säule nach Anspruch 1, **dadurch gekennzeichnet**, daß am Strangpreßprofil (8) benachbart dem außenliegenden Aufnahmeabschnitte (19) ein sich in Fahrzeugquerrichtung nach außen hin erstreckender Steg (26) angeformt ist, der zur Befestigung eines Seitentiels bzw. eines Kotflügels (27) der Aufbaustruktur (1) dient.

5. Säule nach Anspruch 4, **dadurch gekennzeichnet**, daß ein nach innen abgestellter endseitiger Flansch (28) des Kotflügels (27) am Steg (26) bzw. an einer auf den Steg (26) aufgesteckten Blechmutter (29) anliegt und mittels Befestigungsschrauben (30) einstellbar in Lage gehalten ist.

6. Säule nach Anspruch 5, **dadurch gekennzeichnet**, daß die Befestigungsschraube (30) durch einen Dichtkörper (32) und einen mit Abstand zum ersten Steg (26) verlaufenden, zweiten Steg (31) verdeckt wird, wobei der Dichtkörper (32) auf einer Halteleiste (34) sitzt, die mittels der Befestigungsschraube (30) in Lage gehalten ist.

7. Säule nach Anspruch 6, **dadurch gekennzeichnet**, daß der zweite Steg (31) eine Öffnung aufweist, durch die ein Werkzeug zum Eindrehen der Befestigungsschrauben (30) hindurchführbar ist und daß die Öffnung bei montierter Befestigungsschraube (30) durch einen Stopfen (37) verschließbar ist.

8. Säule nach Anspruch 1, **dadurch gekennzeichnet**, daß das Strangpreßprofil (8) und das Schließteil (9) im Bereich der Aufnahmeabschnitte (18, 19) zusätzlich durch Kleben, Schweißen, Nieten oder dgl. miteinander verbunden sind.

9. Säule nach den Ansprüchen 1 und 8, **dadurch gekennzeichnet**, daß das Strangpreßprofil (8) und das Schließteil (9) durch Laserstrahlschweißen miteinander verbunden sind.

10. Säule nach Anspruch 1, **dadurch gekennzeichnet**, daß das Blechteil einen etwa U-förmigen Querschnitt aufweist, wobei sich die beiden parallel zueinander verlaufenden Wandabschnitte in Fahrzeuglängsrichtung erstrecken.

## Claims

1. An upright column for a vehicle body structure preferably produced from light metal, wherein the column constructed in a plurality of parts and containing at least one extruded profile with an open cross-sectional shape is at least partially in the form of a box-shaped hollow profile as viewed in cross-section and is mounted on a sill lying thereunder, **characterized in that** the column (6) comprises an extruded profile (8) and a closure part (9) formed by a sheet-metal part, two spaced, substantially U-shaped receiving portions (18, 19) into which edge portions (20, 21) of the closure part (9) engage, being provided on the extruded profile (8), and each edge portion (20, 21) of the closure part (9) cooperates with the associated receiving portion (18, 19) of the extruded profile (8) by way of a clip fastening (38).

2. A column according to Claim 1, **characterized in that** each receiving portion (18, 19) is formed by an outer straight arm (22) and an inner angled arm (23).

3. A column according to Claims 1 and 2, **characterized in that** adjacent to the inner receiving portion (18) the extruder profile (8) has an undercut groove (15) for receiving a sealing member (16).

4. A column according to Claim 1, **characterized in that** a web (26), extending outwards in the transverse direction of the vehicle and used for securing a lateral portion or a mudguard (27) of the body structure (1), is integrally moulded on the extruded profile (8) adjacent to the outer receiving portion (19).

5. A column according to Claim 4, **characterized in that** an inwardly angled end flange (28) of the mudguard (27) rests on the web (26) or on a sheet-metal nut (29) placed on the web (26) and is held adjustably in position by means of fastening bolts (30).

6. A column according to Claim 5, **characterized in that** the fastening bolt (30) is covered by a sealing member (32) and a second web (31) extending at a distance from the first web (26), the sealing member (32) resting on a retaining strip (34) which is held in position by means of the fastening bolt (30).

7. A column according to Claim 6, **characterized in that** the second web (31) has an opening through which a tool can be inserted in order to screw in the fastening bolts (30), and when the fastening bolt (30) is assembled the opening is closable by a plug (37).

8. A column according to Claim 1, **characterized in that** the extruded profile (8) and the closure part (9) are additionally connected together in the region of the receiving portions (18, 19) by adhesion, welding, riveting or the like.

9. A column according to Claims 1 and 8, **characterized in that** the extruded profile (8) and the closure part (9) are joined together by laser-beam welding.

10. A column according to Claim 1, **characterized in that** the sheet-metal part has a substantially U-shaped cross-section, the two mutually parallel wall portions extending in the longitudinal direction of the vehicle.

## Revendications

1. Montant vertical pour une structure de carrosserie de véhicule, réalisé de préférence en métal léger, le montant conçu en plusieurs parties, contenant au moins un profilé extrudé de section transversale ouverte, ayant au moins par endroits, vu en coupe transversale, la forme d'un profilé creux en caisson et étant placé sur un seuil situé au-dessous, caractérisé en ce que le montant (6) est constitué d'un profilé extrudé (8) et d'un élément de fermeture (9) formé par une pièce en tôle, sur le profilé extrudé(8)étant prévues deux parties de logement (18, 19) à peu près en U, espacées l'une de l'autre, dans lesquelles s'engagent des parties de bordure (20, 21) de l'élément de fermeture (9), et en ce que chaque partie de bordure (20, 21) de l'élément de fermeture (9) coopère, par un accouplement de serrage (38), avec la partie de logement (18, 19) correspondante du profilé extrudé (8).

2. Montant selon la revendication 1, caractérisé en ce que chaque partie de logement (18, 19) est formée par une branche (22) rectiligne extérieure et par une branche (23) coudée intérieure.

3. Montant selon les revendications 1 et 2, caractérisé en ce que le profilé extrudé (8) présente, à proximité de la partie de logement (18) intérieure, une rainure (15) détalonnée destinée à loger une garniture d'étanchéité (16).

4. Montant selon la revendication 1, caractérisé en ce qu'il est formé sur le profilé extrudé (8), à proximité de la partie de logement (19) extérieure, une traverse (26) s'étendant vers l'extérieur dans la direction transversale du véhicule, qui sert à fixer une partie latérale ou une aile (27) de la structure de carrosserie (1).

5. Montant selon la revendication 4, caractérisé en ce qu'une bride (28) de l'aile (27) s'applique contre la traverse (26) ou contre un écrou en tôle (29) placé sur la traverse (26) et est maintenue réglable en position au moyen de vis de fixation (30).

6. Montant selon la revendication 5, caractérisé en ce que la vis de fixation (30) est dissimulée par une garniture d'étanchéité (32) et par une seconde traverse (31), espacée de la première traverse (26), la garniture d'étanchéité (32) reposant sur une baguette de maintien (34) qui est maintenue en position au moyen de la vis de fixation (30).

7. Montant selon la revendication 6, caractérisé en ce que la seconde traverse (31) présente une ouverture à travers laquelle il est possible de faire passer un outil, pour serrer les vis de fixation (30) et en ce que l'ouverture peut être fermée par un bouchon (37), lorsque la vis de fixation (30) est montée.

8. Montant selon la revendication 1, caractérisé en ce que le profilé extrudé (8) et l'élément de fermeture (9) sont assemblés entre eux en plus par collage, soudage, rivetage ou similaire, dans la zone des parties de logement (18, 19).

9. Montant selon les revendications 1 et 8, caractérisé en ce que le profilé extrudé (8) et l'élément de fermeture (9) sont assemblés entre eux par soudage au laser.

10. Montant selon la revendication 1, caractérisé en ce que l'élément en tôle présente une section transversale à peu près en U, les deux parties de paroi parallèles l'une à l'autre s'étendant dans la direction longitudinale du véhicule.
